# EUROPÄISCHE PATENTSCHRIFT

(11) **EP 3 225 483 B1**
(45) Veröffentlichungstag und Bekanntmachung des Hinweises auf die Patenterteilung: **01.12.2021**
(21) Anmeldenummer: 17000477.4
(22) Anmeldetag: 23.03.2017
(51) Int. Cl.: B60T 13/26, B60T 17/02

(54) **VERFAHREN ZUM BETREIBEN EINES DRUCKLUFTSYSTEMS EINES FAHRZEUGS**
METHOD FOR OPERATING A COMPRESSED AIR SYSTEM OF A VEHICLE
PROCÉDÉ DE FONCTIONNEMENT D'UN SYSTÈME À AIR COMPRIMÉ D'UN VÉHICULE

(30) Priorität: 01.04.2016 DE 102016003956
(43) Veröffentlichungstag der Anmeldung: 04.10.2017
(73) Patentinhaber: MAN Truck & Bus SE, 80995 München (DE)
(72) Erfinder: Venjakob, Christoph, 85221 Dachau (DE); Hofstetter, Thomas, 84048 Mainburg (DE); Karacan, Sertac, 80637 München (DE)
(74) Vertreter: Liebl, Thomas

(56) Entgegenhaltungen:
- DE-A1- 2 457 793
- DE-A1-102006 020 904
- US-A1- 2013 304 329

## Beschreibung

Die Erfindung betrifft ein Verfahren zum Betreiben eines Druckluftsystems eines Fahrzeugs, insbesondere eines Nutzfahrzeugs, nach dem Oberbegriff des Patentanspruchs 1, ein Druckluftsystem für ein Fahrzeug, insbesondere für ein Nutzfahrzeug, nach dem Oberbegriff des Patentanspruchs 13 sowie ein Fahrzeug, insbesondere ein Nutzfahrzeug, zur Durchführung des Verfahrens und/oder mit dem Druckluftsystem nach Patentanspruch 14.

Es ist bekannt, an einem Fahrzeug, insbesondere an einem Nutzfahrzeug, ein Druckluftsystem mit wenigstens einem Druckluft-Kreis zur Betätigung wenigstens einer Fahrzeugfunktion vorzusehen. Der Druckluft-Kreis kann dabei beispielsweise als Druckluft-Bremskreis zur Bremsung des Fahrzeugs oder als Luftfederungs-Kreis zur Realisierung einer Fahrzeug-Luftfederung ausgebildet sein. Der Druckluft-Kreis weist üblicherweise wenigstens einen Luft-Speicherbehälter auf, mittels dem komprimierte Luft bzw. Druckluft zwischengespeichert werden kann. Der Luftdruck in dem Luft-Speicherbehälter wird dabei üblicherweise mittels eines Steuereinrichtung gesteuert, mittels der, sofern der Druck in dem Luft-Speicherbehälter einen definierten Einschalt-Druck unterschreitet, der Luftdruck in dem Luft-Speicherbehälter bis zum Erreichen eines definierten, größer als der Einschalt-Druckwert ausgebildeten Ausschalt-Druckwerts selbsttätig bzw. automatisch erhöht wird. Dadurch wird zuverlässig sichergestellt, dass stets eine ausreichende Menge an Druckluft zum Betreiben des Druckluft-Kreises bzw. zur Betätigung der Fahrzeugfunktion vorhanden ist.

Der Einschalt-Druckwert und der Ausschalt-Druckwert bestimmter Druckluft-Kreise, beispielsweise eines Druckluft-Bremskreises, werden dabei auf das zulässige Gesamtgewicht des Fahrzeugs bzw. auf ein vollbeladenes Fahrzeug ausgelegt. Dadurch soll die Funktionsfähigkeit des Druckluft-Kreises unabhängig von der Fahrzeugbeladung zuverlässig sichergestellt werden.

DE 10 2006 020 904 A1 offenbart eine Antriebssteuervorrichtung für einen Kompressor, der zur Erzeugung von Druckluft für ein Druckluftsystem eines Kraftfahrzeugs dient und über den Antriebsmotor des Kraftfahrzeugs angetrieben werden kann.

Aufgabe der Erfindung ist es, ein Verfahren zum Betreiben eines Druckluftsystems eines Fahrzeugs, insbesondere eines Nutzfahrzeugs, sowie ein Druckluftsystem für ein Fahrzeug, insbesondere für ein Nutzfahrzeug, bereitzustellen, mittels denen der Energieverbrauch des Druckluftsystems verringert und gleichzeitig auch die Zuverlässigkeit des Druckluftsystems erhöht wird.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein Verfahren zum Betreiben eines Druckluftsystems eines Fahrzeugs, insbesondere eines Nutzfahrzeugs, vorgeschlagen, wobei das Druckluftsystem wenigstens einen Druckluft-Kreis, insbesondere wenigstens einem Druckluft-Bremskreis zur Bremsung des Fahrzeugs, aufweist, wobei der Druckluft-Kreis wenigstens eine Luft-Speichereinrichtung, insbesondere wenigstens einen Luft-Speicherbehälter, zur Zwischenspeicherung von Druckluft aufweist, wobei eine Druck-Ermittlungseinrichtung, insbesondere ein Drucksensor, vorgesehen ist, mittels der der aktuelle Luftdruck in der Luft-Speichereinrichtung ermittelt wird, wobei eine Steuereinrichtung vorgesehen ist, mittels der der Luftdruck in der Luft-Speichereinrichtung in Abhängigkeit von dem ermittelten Luftdruck gesteuert wird, wobei, sofern der ermittelte Luftdruck einen definierten Einschalt-Druckwert unterschreitet, mittels der Steuereinrichtung der Luftdruck in der Luft-Speichereinrichtung bis zum Erreichen eines definierten, größer als der Einschalt-Druckwert ausgebildeten Ausschalt-Druckwerts selbsttätig bzw. automatisch erhöht wird. Erfindungsgemäß ist eine Beladungszustand-Ermittlungseinrichtung vorgesehen, mittels der der aktuelle Beladungszustand des Fahrzeugs ermittelt wird. Zudem wird, insbesondere zur Verringerung des Energieverbrauchs des Druckluftsystems, mittels der Steuereinrichtung der Einschalt-Druckwert und/oder der Ausschalt-Druckwert in Abhängigkeit von dem ermittelten Beladungszustand des Fahrzeugs selbsttätig bzw. automatisch eingestellt und/oder verstellt.

Auf diese Weise wird der Energieverbrauch des Druckluftsystems deutlich verringert, da der Einschalt-Druckwert und der Ausschalt-Druckwert nun nicht mehr unveränderlich auf das zulässige Gesamtgewicht des Fahrzeugs hin ausgelegt sind, sondern adaptiv an den aktuellen Beladungszustand des Fahrzeugs angepasst werden. Dadurch können beispielsweise bei einem kaum beladenen Fahrzeug ein geringerer Einschalt-Druckwert und ein deutlich geringerer Ausschalt-Druckwert eingestellt werden als bei einem vollbeladenen Fahrzeug. Dies verringert den Energieverbrauch des Druckluftsystems deutlich, da dann bei einem kaum beladenen Fahrzeug ein viel geringeres Druckniveau in dem Druckluftsystem erreicht werden muss als bei einem vollbeladenen Fahrzeug. Dadurch wird auch die Effizienz des wenigstens einen Luftverdichters der Steuereinrichtung erhöht, da ein viel geringerer Fördergegendruck in dem Druckluftsystem vorherrscht. Zudem wird auch die mechanische Belastung für den Luftverdichter und weitere Druckluftkomponenten deutlich verringert, so dass auch die Zuverlässigkeit des Druckluftsystems erhöht wird. Des Weiteren wird auch die Verdichtungstemperatur im Luftverdichter verringert, was sich ebenfalls positiv auf die Zuverlässigkeit des Luftverdichters auswirkt.

Die erfindungsgemäße Verfahrensführung ist besonders effektiv, wenn der Abschalt- und Einschalt-Druckwert des jeweiligen Druckluft-Kreises möglichst niedrig definiert sind über einen möglichst großen Zeitbereich des Fahrzeugbetriebs. Jeder Druckluft-Kreis erfordert üblicherweise einen anderen Druckbereich, um dessen Funktion sicherzustellen und/oder gesetzliche Vorschriften zu erfüllen. Der Mindestdruck des jeweiligen Druckluft-Kreises ist häufig für die Bestimmung des Einschalt-Druckwerts entscheidend. Mindestdruck-Werte können für jeden Druckluft-Kreis als Parameter/Kennlinie/Kennfeld definiert werden in Abhängigkeit von der Fahrzeugbeladung. Bei mehreren Druckluft-Kreisen wertet die Steuereinrichtung vorzugsweise die ermittelten Mindestdrücke der Druckluft-Kreise aus und bestimmt den größten Mindestdruck-Wert als Einschalt-Druckwert für alle Druckluft-Kreise. Die Steuereinrichtung kann dabei eine zu definierende Schaltspanne ausgeben, die von dem Fahrzeugzustand abhängig ist.

In einer bevorzugten Verfahrensführung wird der aktuelle Beladungszustand des Fahrzeugs über das Fahrzeuggewicht und/oder über die auf die Radachsen des Fahrzeugs wirkenden Achslasten bzw. Gewichtskräfte ermittelt. Über diese Parameter kann der Beladungszustand des Fahrzeugs zweckmäßig und mit ausreichender Genauigkeit ermittelt werden. Über die auf die Radachsen des Fahrzeugs wirkenden Achslasten kann dabei beispielsweise auch auf die Achslastverteilung bzw. auf die Gewichtsverteilung des Fahrzeugs geschlossen werden. Die Achslastverteilung des Fahrzeugs kann dann ebenfalls bei der Einstellung des Einschalt-Druckwerts und/oder des Ausschalt-Druckwerts wenigstens eines Druckluft-Kreises berücksichtigt werden.

Bevorzugt weist die Beladungszustand-Ermittlungseinrichtung eine Radlast-Ermittlungseinrichtung auf, mittels der die auf die Fahrzeugräder des Fahrzeugs wirkenden Radlasten ermittelt werden können. Mittels einer derartigen Radlast-Ermittlungseinrichtung können das Fahrzeuggewicht und/oder die auf die Radachsen des Fahrzeugs wirkenden Achslasten einfach und zuverlässig ermittelt werden. Radlast-Ermittlungseinrichtungen sind bereits hinlänglich aus dem Stand der Technik bekannt, beispielsweise aus der DE 100 17 506 A1, die eine Vorrichtung zur Bestimmung der Radaufstandkräfte eines Kraftfahrzeugs beschreibt, oder aus der EP 0 666 469 A1, aus der eine Vorrichtung zur Anzeige der Achslast eines gefederten Fahrzeugs hervorgeht. Um den aktuellen Beladungszustand des Fahrzeugs mit einer besonders hohen Genauigkeit ermitteln zu können, können die Radlasten auch mehrfach ermittelt werden und die ermittelten Radlast-Werte gemittelt und/oder plausibilisiert werden.

Weiter bevorzugt wird, sofern das aktuelle Fahrzeuggewicht einen definierten Fahrzeuggewicht-Wert überschreitet, mittels der Steuereinrichtung ein höherer Einschalt-Druckwert und/oder ein höherer Ausschalt-Druckwert in dem wenigstens einen Druckluft-Kreis mittels der Steuereinrichtung eingestellt als für den Fall, dass das Fahrzeuggewicht den definierten Fahrzeuggewicht-Wert unterschreitet. Auf diese Weise kann die erfindungsgemäße Verfahrensführung effektiv realisiert werden.

Vorzugsweise ist der wenigstens eine Druckluft-Kreis durch einen Druckluft-Bremskreis zur Bremsung des Fahrzeugs gebildet, da bei einem derartigen Druckluft-Bremskreis die Fahrzeugbeladung einen wesentlichen Parameter darstellt. Alternativ und/oder zusätzlich kann der wenigstens eine Druckluft-Bremskreis aber auch durch einen Fahrwerk-Kreis, insbesondere durch einen Luftfederungs-Kreis, gebildet sein.

In einer bevorzugten konkreten Ausgestaltung weist das Fahrzeug wenigstens eine Vorderachse und wenigstens eine Hinterachse und mehrere, insbesondere zwei, als Druckluft-Bremskreise ausgebildete Druckluft-Kreise auf, wobei mittels eines ersten Druckluft-Bremskreises die vorderachsseitigen Fahrzeugräder gebremst werden, und wobei mittels eines zweiten Druckluft-Benennungskreises die hinterachsseitigen Fahrzeugräder gebremst werden. Bevorzugt ist dabei vorgesehen, dass mittels der Steuereinrichtung der Einschalt-Druckwert und/oder der Ausschalt-Druckwert des ersten und zweiten Druckluft-Bremskreises in Abhängigkeit von dem ermittelten aktuellen Beladungszustand des Fahrzeugs selbsttätig bzw. automatisch eingestellt und/oder verstellt werden.

Weiter bevorzugt werden der Einschalt-Druckwert des ersten Druckluft-Bremskreises und der Einschalt-Druckwert des zweiten Druckluft-Bremskreises mittels der Steuereinrichtung stets wertgleich bzw. identisch eingestellt, um den Aufbau des Druckluftsystems zu vereinfachen und die Zuverlässigkeit des Druckluftsystems zu erhöhen. Ebenso bevorzugt werden der Ausschalt-Druckwert des ersten Druckluft-Bremskreises und der Ausschalt-Druckwert des zweiten Druckluft-Bremskreises mittels der Steuereinrichtung stets wertgleich eingestellt. Alternativ wäre es aber natürlich auch denkbar, dass die Einschalt-Druckwerte und/oder die Ausschalt-Druckwerte nicht wertgleich bzw. identisch eingestellt werden. Sofern noch wenigstens ein weiterer Druckluft-Kreislauf, insbesondere ein Luftfederungs-Kreis oder ein Nebenverbraucher-Kreis, vorgesehen ist, für den die Beladung des Fahrzeugs relevant ist, ist es bevorzugt, wenn auch der Einschalt-Druckwert und der Ausschalt-Druckwert dieses wenigstens einen Druckluft-Kreislaufs stets wertgleich mit dem Druckwerten der Druckluft-Bremskreise eingestellt ist.

Vorzugsweise erfolgt die Einstellung des Einschalt-Druckwerts und/oder des Ausschalt-Druckwerts des wenigstens einen Druckluft-Kreises mittels eines in der Steuereinrichtung, insbesondere in einem Steuergerät der Steuereinrichtung, gespeicherten Kennfelds, in das die Abhängigkeit des Einschalt-Druckwerts und/oder des Ausschalt-Druckwerts von dem Beladungszustand des Fahrzeugs eingetragen ist. Mittels eines derartigen Kennfelds können der Einschalt-Druckwert und/oder der Ausschalt-Druckwert auf einfache und zuverlässige Weise ermittelt werden.

In einer weiteren bevorzugten Ausgestaltung kann mittels der Steuereinrichtung ermittelt werden, ob sich das Fahrzeug bzw. eine Antriebseinrichtung des Fahrzeugs in einem Schubbetrieb befindet oder nicht, wobei, sofern sich das Fahrzeug in dem Schubbetrieb befindet, die Steuereinrichtung selbsttätig bzw. automatisch von einem Normalbetriebsmodus in einen Schubbetriebsmodus schaltet, in dem mittels der Steuereinrichtung der Luftdruck in der wenigstens einen Luft-Speichereinrichtung bis zum Erreichen eines definierten Maximal-Druckwerts der Luft-Speichereinrichtung erhöht wird. Sofern sich das Fahrzeug nicht mehr in dem Schubbetrieb befindet, kann die Steuereinrichtung dann wieder selbsttätig in den Normalbetriebsmodus schalten. Dadurch wird die Effizienz des Druckluftsystems weiter erhöht, da in dem Schubbetrieb des Fahrzeugs, in dem der wenigstens eine Luftverdichter des Druckluftsystems energiesparend durch das Ausrollen des Fahrzeugs angetrieben wird, ein möglichst hoher Luftdruck in der Luft-Speichereinrichtung erzeugt bzw. eine möglichst große Menge an Druckluft in der Luft-Speichereinrichtung gespeichert wird. Diese energiesparend erzeugte Druckluft kann dann im Schubbetriebsmodus sowie auch im Normalbetriebsmodus des Fahrzeugs verbraucht werden. Je kleiner dabei der Einschalt-Druckwert bzw. der Ausschalt-Druckwert ist, umso größer ist die zusätzliche Luftmenge bzw. der Luftpuffer, der in dem Schubbetriebsmodus gespeichert werden kann. Durch die zusätzliche Luftmenge kann zudem die Luftförderung vermehrt in Schubbetriebsphasen verlagert und es können die Stop-Phasen in einem Start-Stop-System verlängert werden. Bevorzugt ist dabei vorgesehen, dass der Maximal-Druckwert größer ausgebildet ist als der Ausschalt-Druckwert der jeweiligen Luft-Speichereinrichtung. Insbesondere ist der Maximal-Druckwert durch den maximal möglichen Druck bzw. durch den maximalen Systemdruck gebildet. Als Schubbetrieb ist hier weiter ein Betrieb des Fahrzeugs zu verstehen, bei dem die Antriebseinrichtung, insbesondere eine als Brennkraftmaschine ausgebildete Antriebseinrichtung, bei nicht getrenntem Kraftschluss (z. B. bei nicht getretener Kupplung) durch das Fahrzeug geschleppt wird.

Weiter bevorzugt wird die Ermittlung des aktuellen Beladungszustands des Fahrzeugs periodisch wiederholt, um den Einschalt-Druckwert bzw. den Ausschalt-Druckwert stets optimal an den aktuellen Beladungszustand des Fahrzeugs anpassen zu können. Weiter bevorzugt wird der aktuelle Beladungszustand des Fahrzeugs bei jedem Anhalten und/oder bei jedem Stillstand und/oder bei jedem Starten des Fahrzeugs ermittelt, um Änderungen des Fahrzeug-Beladungszustands zuverlässig bestimmen zu können. Vorzugsweise wird der aktuelle Beladungszustand des Fahrzeugs in Echtzeit ermittelt, um die Effizienz der erfindungsgemäßen Verfahrensführung weiter zu erhöhen.

In einer bevorzugten konkreten Ausgestaltung weist die Steuereinrichtung ein Steuergerät und/oder wenigstens einen, insbesondere abschaltbaren, Luftverdichter, insbesondere wenigstens einen Kompressor, auf. Bevorzugt ist dabei vorgesehen, dass der Luftverdichter in einem Normalbetriebsmodus des Fahrzeugs von einer fahrzeugseitigen Antriebseinrichtung, insbesondere einer Brennkraftmaschine, zum Antreiben des Fahrzeugs angetrieben wird. Alternativ und/oder zusätzlich kann der Luftverdichter auch mittels einer speziell zum Antreiben des Luftverdichters vorgesehenen, insbesondere elektrischen, Luftverdichter-Antriebseinrichtung angetrieben werden.

Vorzugsweise weist das Druckluftsystem mehrere Druckluft-Kreise auf, wobei das Druckluftsystem, in Luft-Strömungsrichtung gesehen, stromab des wenigstens einen Luftverdichters ein Mehrkreis-Schutzventil aufweist, mittels dem die Luftzufuhr zu jedem Druckluft-Kreis gesperrt und freigegeben werden kann. Mittels eines derartigen Mehrkreis-Schutzventils kann das Druckluftsystem einfach und zuverlässig gesteuert werden. Insbesondere kann damit beispielsweise ein Druckluft-Kreis gesperrt werden, wenn dieser defekt ist. Bevorzugt ist zudem vorgesehen, dass, in Luft-Strömungsrichtung gesehen, stromab des wenigstens einen Luftverdichters und stromauf des Mehrkreis-Schutzventils wenigstens eine Luft-Trocknungseinrichtung zur Trocknung der durch das Druckluftsystem strömenden Luft angeordnet ist. So wird einer Ansammlung von Feuchtigkeit in dem Druckluftsystem zuverlässig entgegengewirkt.

Zur Lösung der bereits genannten Aufgabe wird ferner ein Druckluftsystem für ein Fahrzeug, insbesondere für ein Nutzfahrzeug, beansprucht, mit wenigstens einem Druckluftkreis, insbesondere mit wenigstens einem Druckluft-Bremskreis zur Bremsung des Fahrzeugs, wobei der Druckluft-Kreis wenigstens eine Luft-Speichereinrichtung, insbesondere wenigstens einen Luft-Speicherbehälter, zur Zwischenspeicherung von Luft aufweist, wobei eine Druck-Ermittlungseinrichtung, insbesondere ein Drucksensor, vorgesehen ist, mittels der der aktuelle Luftdruck in der Luft-Speichereinrichtung ermittelt werden kann, wobei eine Steuereinrichtung vorgesehen ist, mittels der der Luftdruck in der Luftspeicher-Einrichtung in Abhängigkeit von dem ermittelten Luftdruck gesteuert werden kann, wobei, sofern der ermittelte Luftdruck einen definierten Einschalt-Druckwert unterschreitet, mittels der Steuereinrichtung der Luftdruck in der Luft-Speichereinrichtung bis zum Erreichen eines definierten, größer als der Einschalt-Druckwert ausgebildeten Ausschalt-Druckwerts selbsttätig bzw. automatisch erhöht werden kann. Erfindungsgemäß ist eine Beladungszustand-Ermittlungseinrichtung vorgesehen, mittels der der aktuelle Beladungszustand des Fahrzeugs ermittelt werden kann. Zudem kann, insbesondere zur Verringerung des Energieverbrauchs des Druckluftsystems, mittels der Steuereinrichtung der Einschalt-Druckwert und/oder der Ausschalt-Druckwert in Abhängigkeit von dem ermittelten Beladungszustand des Fahrzeugs selbsttätig bzw. automatisch eingestellt und/oder verstellt werden.

Die sich durch das erfindungsgemäße Druckluftsystem ergebenden Vorteile sind identisch mit den bereits gewürdigten Vorteilen der erfindungsgemäßen Verfahrensführung und werden an dieser Stelle nicht wiederholt.

Des Weiteren wird auch ein Fahrzeug, insbesondere ein Nutzfahrzeug, zur Durchführung des erfindungsgemäßen Verfahrens und/oder mit dem erfindungsgemäßen Druckluftsystem beansprucht. Die sich hieraus ergebenden Vorteile sind ebenfalls identisch mit den bereits gewürdigten Vorteilen der erfindungsgemäßen Verfahrensführung und werden an dieser Stelle ebenfalls nicht wiederholt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Seitenansicht ein Fahrzeug mit dem erfindungsgemäßen Druckluftsystem;
- Fig. 2: eine schematische Darstellung, aus der der Aufbau des Druckluftsystems hervorgeht;
- Fig. 3: eine schematische Darstellung, anhand der der Ablauf der erfindungsgemäßen Verfahrensführung erläutert wird; und
- Fig. 4: ein Diagramm, anhand dem die Verfahrensführung erläutert wird.

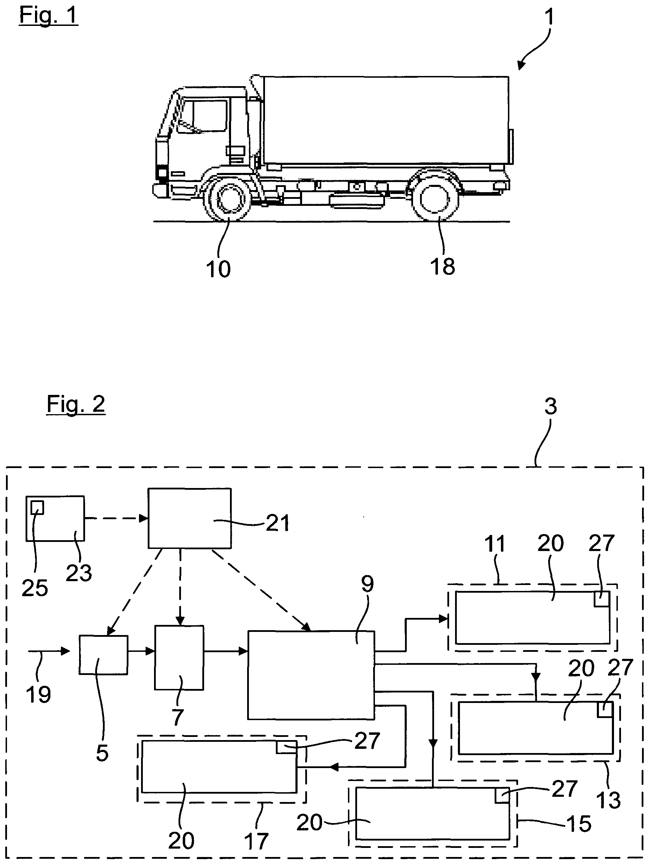

In Fig. 1 ist ein hier beispielhaft als Lastkraftwagen ausgebildetes Fahrzeug 1 mit einem erfindungsgemäßen Druckluftsystem 3 (Fig. 2) gezeigt. Der Aufbau des Druckluftsystems 3 wird nachfolgend anhand von Fig. 2 näher erläutert:
Gemäß Fig. 2 weist das Druckluftsystem 1 hier beispielhaft, in Luft-Strömungsrichtung gesehen, einen Kompressor 5, eine Luft-Trocknungseinrichtung 7, ein Mehrkreis-Schutzventil 9 und mehrere, hier beispielhaft vier, Druckluft-Kreise 11, 13, 15, 17 auf. Mittels des hier beispielhaft als Kolbenverdichter ausgebildeten Kompressors 5 wird dabei zunächst Luft 19 aus der Umgebung angesaugt und komprimiert. Anschließend wird die komprimierte Luft 19 mittels der Luft-Trocknungseinrichtung 7 getrocknet und dem Mehrkreis-Schutzventil 9 zugeführt. Mittels des Mehrkreis-Schutzventils 9 kann die Luftzufuhr zu jedem Druckluft-Kreis 11, 13, 15, 17 gesperrt und freigegeben werden.

Weiter ist der Druckluft-Kreis 11 hier beispielhaft als Druckluft-Bremskreis zur Bremsung von vorderachsenseitigen Fahrzeugrädern 10 (Fig. 1) des Fahrzeugs 3 ausgebildet. Der Druckluft-Kreis 13 ist hier beispielhaft als Druckluft-Bremskreis zur Bremsung von hinterachsenseitigen Fahrzeugrädern 18 (Fig. 1) des Fahrzeugs 3 ausgebildet. Der Druckluft-Kreis 15 ist hier beispielhaft als Luftfederungs-Kreis ausgebildet, mittels dem eine Luftfederung des Fahrzeugs 3 realisiert wird. Der Druckluft-Kreis 17 ist hier beispielhaft als Nebenverbraucher-Kreis ausgebildet, mittels dem Nebenverbraucher des Fahrzeugs 3 mit Druckluft versorgt werden. Die Nebenverbraucher können dabei beispielsweise durch pneumatisch gefederte und/oder pneumatisch verstellbare Fahrzeugsitze, durch eine Fahrerhausfederung, durch ein Lufthorn, durch eine Lenkradverstellung, oder durch eine Schaltunterstützung gebildet sein.

Wie in Fig. 2 weiter gezeigt ist, weist hier jeder Druckluft-Kreis 11, 13, 15, 17 einen Luft-Speicherbehälter 20 auf, mittels dem komprimierte Luft bzw. Druckluft 19 zwischengespeichert werden kann. Jedem Luft-Speicherbehälter 20 ist hier zudem ein Drucksensor 27 zugeordnet, mittels dem der Luftdruck in dem jeweiligen Luft-Speicherbehälter 20 gemessen werden kann. Alternativ zu den Drucksensoren 27 könnte der Luftdruck in den Luft-Speicherbehältern 22 aber auch mittels jeder anderen geeigneten Druck-Ermittlungseinrichtung ermittelt werden.

Die Drucksensoren 27 sind signaltechnisch mit einem Steuergerät 21 verbunden, mittels dem hier beispielhaft der Kompressor 5, die Luft-Trocknungseinrichtung 7 und das Mehrkreis-Schutzventil 9 in Abhängigkeit von den mittels der Drucksensoren 27 gemessenen Luftdruck-Werten gesteuert werden. In einem Normalbetriebsmodus des Steuergeräts 21 werden hier dabei, sofern der ermittelte Luftdruck in einem der Luft-Speicherbehälter 20 einen definierten Einschalt-Druckwert unterschreitet, der Kompressor 5 und das Mehrkreis-Schutzventil 9 derart mittels des Steuergeräts 21 angesteuert, dass der Luftdruck in dem jeweiligen Speicherbehälter 20 bis zum Erreichen eines definierten, größer als der Einschalt-Druckwert ausgebildeten Ausschalt-Druckwerts selbsttätig bzw. automatisch erhöht wird. Auf diese Weise wird zuverlässig sichergestellt, dass in den Luft-Speicherbehältern 20 der Druckluft-Kreise 11, 13, 15, 17 stets eine ausreichende Menge an Druckluft gespeichert ist. Zudem wird hier mittels des Steuergeräts 21 auch die Lufttrocknung mittels der Luft-Trocknungseinrichtung 7 an die mittels des Kompressors 5 komprimierte Luftmenge angepasst.

Weiter ist das Steuergerät 21 hier auch signaltechnisch mit einer Beladungszustand-Ermittlungseinrichtung 23 verbunden, mittels der der aktuelle Beladungszustand des Fahrzeugs 3 ermittelt werden kann. Der Beladungszustand des Fahrzeugs 3 wird hier beispielhaft über das Fahrzeuggewicht ermittelt. Zur Ermittlung des aktuellen Fahrzeuggewichts weist die Beladungszustand-Ermittlungseinrichtung 23 hier beispielhaft eine Radlast-Ermittlungseinrichtung 25 auf, mittels der auf die Fahrzeugräder 10, 18 des Fahrzeugs 3 wirkenden Radlasten ermittelt werden können.

Des Weiteren werden hier beispielhaft sowohl der Einschalt-Druckwert als auch der Ausschalt-Druckwert der Druckluft-Kreise 11, 13, 15 mittels des Steuergeräts 21 in Abhängigkeit von dem ermittelten aktuellen Fahrzeuggewicht selbsttätig bzw. automatisch verstellt. Bei einem höheren Fahrzeuggewicht wird hier dabei stets ein höherer Einschalt-Druckwert für die Druckluft-Kreise 11, 13, 15 mittels des Steuergeräts 21 eingestellt als bei einem geringeren Fahrzeuggewicht. Zudem wird hier bei einem höheren Fahrzeuggewicht auch stets ein höherer Ausschalt-Druckwert für die Druckluft-Kreise 11, 13, 15 mittels des Steuergeräts 21 eingestellt als bei einem geringeren Fahrzeuggewicht. Auf diese Weise wird der Energieverbrauch des Druckluftsystems 3 deutlich verringert und die Zuverlässigkeit des Druckluftsystems 3 erhöht. Der Einschalt-Druckwert und der Ausschalt-Druckwert des Nebenverbraucher-Kreises 17 werden dabei nicht in Abhängigkeit von dem ermittelten aktuellen Fahrzeuggewicht verstellt. Grundsätzlich könnte natürlich aber auch vorgesehen sein, dass der Einschalt-Druckwert und der Ausschalt-Druckwert des Nebenverbraucher-Kreises 17 in Abhängigkeit von dem ermittelten aktuellen Fahrzeuggewicht verstellt werden.

Mittels der Steuereinrichtung 21 kann hier beispielhaft auch ermittelt werden, ob sich das Fahrzeug 3 bzw. eine Antriebseinrichtung des Fahrzeugs 3 in einem Schubbetrieb befindet oder nicht. Sofern sich das Fahrzeug 3 in dem Schubbetrieb befindet, schaltet die Steuereinrichtung 21 dann selbsttätig bzw. automatisch von dem Normalbetriebsmodus in einen Schubbetriebsmodus, in dem mittels der Steuereinrichtung 21 der Luftdruck in den Luft-Speichereinrichtungen 20 bis zum Erreichen eines definierten Maximal-Druckwerts der jeweiligen Luft-Speichereinrichtung 20 erhöht wird. Dieser Maximal-Druckwert ist hier beispielhaft größer als jeder mittels des Steuergeräts 21 einstellbarer Ausschalt-Druckwert. Dadurch wird die Effizienz des Druckluftsystems 3 deutlich erhöht.

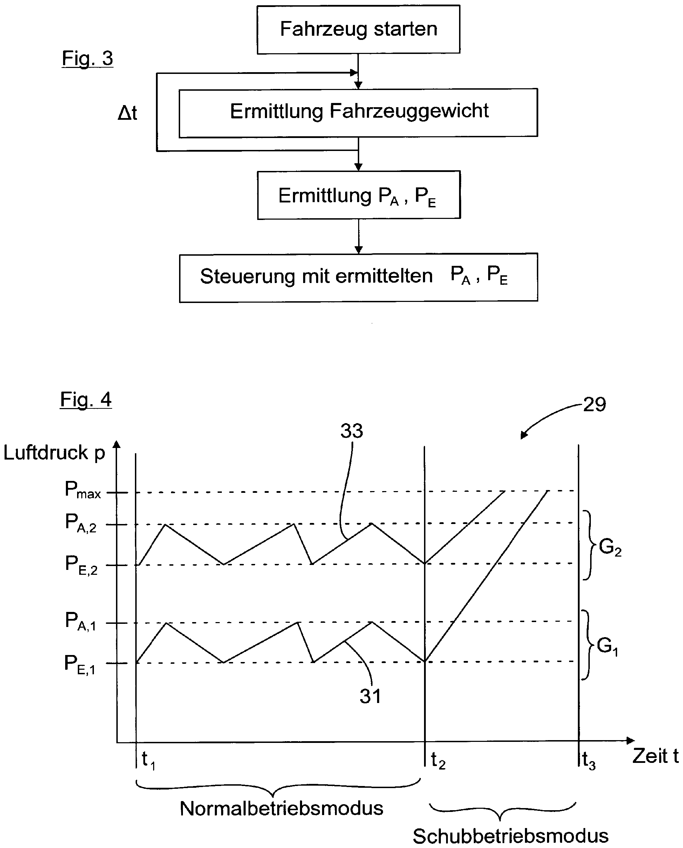

Nachfolgend wird die Steuerung des Steuergeräts 21 nochmals beispielhaft und schematisch anhand von Fig. 4 erläutert:
In Fig. 4 ist ein Diagramm 29 gezeigt, in das zwei Kurven 31, 33 eingetragen sind. Die Kurve 31 zeigt dabei den zeitlichen Verlauf des Luftdrucks p in einem der Druckluft-Kreise 11, 13, 15, wenn das Fahrzeug 1 ein erstes Fahrzeuggewicht G₁ aufweist, das geringer ist als ein definierter Fahrzeuggewicht-Wert. Der Einschalt-Druckwert ist hier dabei durch einen ersten Einschalt-Druckwert p_{E,1} gebildet. Der Ausschalt-Druckwert ist hier durch einen ersten Ausschalt-Druckwert p_{A,1} gebildet. Die Kurve 33 zeigt den zeitlichen Verlauf des Luftdrucks p in einem der Druckluft-Kreise 11, 13, 15, wenn das Fahrzeug 1 ein zweites Fahrzeuggewicht G₂ aufweist, das größer ist als der definierte Fahrzeuggewicht-Wert. Der Einschalt-Druckwert ist hier dabei durch einen zweiten Einschalt-Druckwert p_{E,2} gebildet, der größer als der erste Einschalt-Druckwert p_{E,1} ausgebildet ist. Der Ausschalt-Druckwert ist hier durch einen zweiten Ausschalt-Druckwert p_{A,2} gebildet, der größer als der erste Ausschalt-Druckwert p_{A,1} ausgebildet ist. Bei der Betriebsweise des Druckluftsystems 1 gemäß der Kurve 31 sind die Effizienz des Kompressors 5 und die Zuverlässigkeit des gesamten Druckluftsystems 3 im Vergleich zu der Betriebsweise des Druckluftsystems 1 gemäß der Kurve 33 deutlich erhöht.

Wie aus Fig. 2 weiter hervorgeht, befindet sich das Steuergerät 21 ausgehend von einem Zeitpunkt t₁ bis zu einem Zeitpunkt t₂ in dem Normalbetriebsmodus, in dem der Luftdruck in den Luft-Speicherbehältern 20 bis zu dem jeweiligen Ausschalt-Druckwert erhöht wird, wenn der Luftdruck in den Luft-Speicherbehältern 20 den jeweiligen Einschalt-Druckwert unterschreitet. Zwischen dem Zeitpunkt t₂ und dem Zeitpunkt t₃ befindet sich das Steuergerät 21 in dem Schubbetriebsmodus, in dem der Luftdruck in den Luft-Speicherbehältern 20 bis zu dem Maximal-Druckwert des jeweiligen Luft-Speicherbehälters 20 erhöht wird. Der kleinere erste Einschalt-Druckwert p_{E},₁ ermöglicht es dabei mehr Druckluft während des Schubbetriebs zu erzeugen als der größere zweite Einschalt-Druckwert p_{E,2}.

Des Weiteren werden der Einschalt-Druckwert des Druckluft-Bremskreises 11 und der Einschalt-Druckwert des Druckluft-Bremskreises 13 hier beispielhaft mittels des Steuergeräts 21 stets wertgleich eingestellt. Zudem werden hier auch der Ausschalt-Druckwert des Druck-Bremskreises 11 und der Ausschalt-Druckwert des Druckluft-Bremskreises 13 mittels des Steuergeräts 21 stets wertgleich bzw. identisch eingestellt. Weiter erfolgt die Einstellung des Einschalt-Druckwerts und des Ausschalt-Druckwerts der Druckluft-Kreise 11, 13, 15 mittels eines in dem Steuergerät 21 gespeicherten Kennfelds, in das die Abhängigkeit des jeweiligen Einschalt-Druckwerts und des jeweiligen Ausschalt-Druckwerts von dem Beladungszustand des Fahrzeugs 3 eingetragen ist. Zudem wird die Ermittlung des Beladungszustands des Fahrzeugs 3 hier beispielhaft periodisch wiederholt.

Anhand von Fig. 3 wird nun nachfolgend nochmals der grobe Ablauf der erfindungsgemäßen Verfahrensführung erläutert:
Nach dem Starten des Fahrzeugs 3 bzw. der Antriebseinrichtung des Fahrzeugs 3 wird zunächst das Fahrzeuggewicht ermittelt. Anschließend wird in Abhängigkeit von dem ermittelten Fahrzeuggewicht der optimale Einschalt-Druckwert und der optimale Ausschalt-Druckwert für den jeweiligen Luft-Speicherbehälter 20 ermittelt. Schließlich wird der Luftdruck in den Luft-Speicherbehältern 20 mit den ermittelten Einschalt-Druckwerten und den ermittelten Ausschalt-Druckwerten gesteuert. Zudem wird nach Ermittlung des Fahrzeuggewichts nach einem definierten Zeitintervall Δt das Fahrzeuggewicht erneut ermittelt.

### Bezugszeichenliste

- 1: Fahrzeug
- 3: Druckluftsystem
- 5: Kompressor
- 7: Luft-Trocknungseinrichtung
- 9: Mehrkreis-Schussventil
- 10: Fahrzeugrad
- 11, 13, 15, 17: Druckluft-Kreis
- 18: Fahrzeugrad
- 19: Luft
- 20: Luft-Speicherbehälter
- 21: Steuergerät
- 23: Beladungszustand- Ermittlungseinrichtung
- 25: Radlast-Ermittlungseinrichtung
- 27: Drucksensor
- 29: Diagramm
- 31: Kurve
- 33: Kurve
- G₁: erstes Fahrzeuggewicht
- G_{def}: Fahrzeuggewicht-Wert
- G₂: zweites Fahrzeuggewicht
- p: Luftdruck
- p_{A,1}: erster Ausschalt-Druckwert
- p_{A,2}: zweiter Ausschalt-Druckwert
- p_{E,1}: erster Einschalt-Druckwert
- p_{E,2}: zweiter Einschalt-Druckwert
- pₘₐₓ: Maximal-Druckwert
- t: Zeit
- t₁: erster Zeitpunkt
- t₂: zweiter Zeitpunkt
- t₃: dritter Zeitpunkt
- Δt: Zeitintervall

## Patentansprüche

1. Verfahren zum Betreiben feines Druckluftsystems eines Fahrzeugs, insbesondere eines
Nutzfahrzeugs, wobei das Druckluftsystem (3) wenigstens einen Druckluft-Kreis (11, 13, 15, 17), insbesondere wenigstens einen Druckluft-Bremskreis zur Bremsung des Fahrzeugs, aufweist,
wobei der Druckluft-Kreis (11, 13, 15) wenigstens eine Luft-Speichereinrichtung (20), insbesondere wenigstens einen Luft-Speicherbehälter, zur Zwischenspeicherung von Druckluft aufweist,
wobei eine Druck-Ermittlungseinrichtung (27), insbesondere ein Drucksensor, vorgesehen ist, mittels der der aktuelle Luftdruck in der Luft-Speichereinrichtung (20) ermittelt wird,
wobei eine Steuereinrichtung (5, 9, 21) vorgesehen ist, mittels der der Luftdruck in der Luft-Speichereinrichtung (20) in Abhängigkeit von dem ermittelten Luftdruck gesteuert wird, **dadurch gekennzeichnet, dass**
sofern der ermittelte Luftdruck einen definierten Einschalt-Druckwert (p_{E1}, p_{E2}) unterschreitet, mittels der Steuereinrichtung (5, 9, 21) der Luftdruck in der Luft-Speichereinrichtung (20) bis zum Erreichen eines definierten, größer als der Einschalt-Druckwert (p_{E1}, p_{E2}) ausgebildeten Ausschalt-Druckwerts (p_{A1}, p_{A2}) selbsttätig erhöht wird, wobei eine Beladungszustand-Ermittlungseinrichtung (23) vorgesehen ist, mittels der der aktuelle Beladungszustand des Fahrzeugs (1) ermittelt wird, und
dass, insbesondere zur Verringerung des Energieverbrauchs des Druckluftsystems (3), mittels der Steuereinrichtung (5, 9, 21) der Einschalt-Druckwert (p_{E1}, p_{E2}) und/oder der Ausschalt-Druckwert (p_{A1}, p_{A2}) in Abhängigkeit von dem ermittelten Beladungszustand des Fahrzeugs (1) selbsttätig eingestellt und/oder verstellt wird.

2. Verfahren nach Anspruch 1, **dadurch gekennzeichnet, dass** der aktuelle Beladungszustand des Fahrzeugs (1) über das Fahrzeuggewicht und/oder über die auf die Radachsen des Fahrzeugs (1) wirkenden Achslasten ermittelt wird.

3. Verfahren nach Anspruch 1 oder 2, **dadurch gekennzeichnet, dass** die Beladungszustand-Ermittlungseinrichtung (23) eine Radlasten-Ermittlungseinrichtung aufweist, mittels der die auf die Fahrzeugräder (10, 18) des Fahrzeugs (1) wirkenden Radlasten ermittelt werden.

4. Verfahren nach Anspruch 2 oder 3, **dadurch gekennzeichnet, dass**, sofern das aktuelle Fahrzeuggewicht (G₂) einen definierten Fahrzeuggewicht-Wert (G_{def}.) überschreitet, mittels der Steuereinrichtung (5, 9, 21) ein höherer Einschalt-Druckwert (p_{E2}) und/oder ein höherer Ausschalt-Druckwert (p_{A2}) in dem wenigstens einen Druckluft-Kreis (11, 13, 17) mittels der Steuereinrichtung (5, 9, 21) eingestellt wird als für den Fall, dass das Fahrzeuggewicht (G₁) den definierten Fahrzeuggewicht-Wert (G_{def}.) unterschreitet.

5. Verfahren nach einem der vorhergehenden Ansprüche, **dadurch gekennzeichnet, dass** der wenigstens eine Druckluft-Kreis durch einen Druckluft-Bremskreis zur Bremsung (11, 13) des Fahrzeugs gebildet ist, und/oder dass der wenigstens eine Druckluft-Kreis durch einen Fahrwerk-Kreis (15), insbesondere durch einen Luftfederungs-Kreis, gebildet ist.

6. Verfahren nach einem der vorhergehenden Ansprüche, **dadurch gekennzeichnet, dass** das Fahrzeug wenigstens eine Vorderachse und wenigstens eine Hinterachse und mehrere, insbesondere zwei, als Druckluft-Bremskreise (11, 13) ausgebildete Druckluft-Kreise aufweist, wobei mittels eines ersten Druckluft-Bremskreises (11) die vorderachsenseitigen Fahrzeugräder (10) gebremst werden, und wobei mittels eines zweiten Druckluft-Bremskreises (13) die hinterachsenseitigen Fahrzeugräder (18) gebremst werden, wobei bevorzugt vorgesehen ist, dass mittels der Steuereinrichtung (5, 9, 21) der Einschalt-Druckwert und/oder der Ausschalt-Druckwert (p_{A1}, p_{A2}) des ersten und zweiten Druckluft-Bremskreises (11, 13) in Abhängigkeit von dem ermittelten Beladungszustand des Fahrzeugs (1) selbsttätig eingestellt und/oder verstellt wird.

7. Verfahren nach Anspruch 6, **dadurch gekennzeichnet, dass** der Einschalt-Druckwert des ersten Druckluft-Bremskreises (11) und der Einschalt-Druckwert des zweiten Druckluft-Bremskreises (13) mittels der Steuereinrichtung (5, 9, 21) stets wertgleich eingestellt werden und/oder der Ausschalt-Druckwert des ersten Druckluft-Bremskreises (11) und der Ausschalt-Druckwert des zweiten Druckluft-Bremskreises (13) mittels der Steuereinrichtung (5, 9, 21) stets wertgleich eingestellt werden.

8. Verfahren nach einem der vorhergehenden Ansprüche, **dadurch gekennzeichnet, dass** die Einstellung des Einschalt-Druckwerts (p_{E1}, p_{E2}) und/oder des Ausschalt-Druckwerts (p_{A1}, p_{A2}) des wenigstens einen Druckluft-Kreises (11, 13, 15) mittels eines in der Steuereinrichtung (5, 9, 21), insbesondere in einem Steuergerät der Steuereinrichtung, gespeicherten Kennfelds erfolgt, in das die Abhängigkeit des Einschalt-Druckwerts (p_{E1}, p_{E2}) und/oder des Ausschalt-Druckwerts (p_{A1}, p_{A2}) von dem Beladungszustand des Fahrzeugs (1) eingetragen ist.

9. Verfahren nach einem der vorhergehenden Ansprüche, **dadurch gekennzeichnet, dass** mittels der Steuereinrichtung (5, 9, 21) ermittelbar ist, ob sich das Fahrzeug (1) in einem Schubbetrieb befindet oder nicht, wobei, sofern sich das Fahrzeug (1) in dem Schubbetrieb befindet, die Steuereinrichtung (5, 9, 21) selbsttätig von einem Normalbetriebsmodus in einen Schubbetriebsmodus schaltet, in dem mittels der Steuereinrichtung (5, 9, 21) der Luftdruck in der wenigstens einen Luft-Speichereinrichtung bis zum Erreichen eines definierten Maximal-Druckwerts (pₘₐₓ) der Luft-Speichereinrichtung (20) erhöht wird, wobei bevorzugt vorgesehen ist, dass der Maximal-Druckwert (pₘₐₓ) größer ausgebildet ist als der Ausschalt-Druckwert (p_{A1}, p_{A2}) der jeweiligen Luft-Speichereinrichtung (20).

10. Verfahren nach einem der vorhergehenden Ansprüche, **dadurch gekennzeichnet, dass** die Ermittlung des aktuellen Beladungszustands des Fahrzeugs (1) periodisch wiederholt wird, und/oder dass der aktuelle Beladungszustand des Fahrzeugs (1) in Echtzeit ermittelt wird.

11. Verfahren nach einem der vorhergehenden Ansprüche, **dadurch gekennzeichnet, dass** die Steuereinrichtung ein Steuergerät (21) und/oder wenigstens einen Luftverdichter (5), insbesondere wenigstens einen Kompressor, aufweist, wobei bevorzugt vorgesehen ist, dass der Luftverdichter (5) in einem Normalbetriebsmodus des Fahrzeugs (1) von einer fahrzeugseitigen Antriebseinrichtung zum Antreiben des Fahrzeugs (1) angetrieben wird.

12. Verfahren nach Anspruch 11, **dadurch gekennzeichnet, dass** das Druckluftsystem (3) mehrere Druckluft-Kreise (11, 13, 15, 17) aufweist, wobei das Druckluftsystem (3), in Luft-Strömungsrichtung gesehen, stromab des wenigstens einen Luftverdichters (5) ein Mehrkreis-Schutzventil (9) aufweist, mittels dem die Luftzufuhr zu jedem Druckluft-Kreis (11, 13, 15, 17) sperrbar und freigebbar ist, wobei bevorzugt vorgesehen ist, dass, in Luft-Strömungsrichtung gesehen, stromab des wenigstens einen Luftverdichters (5) und stromauf des Mehrkreis-Schutzventils (9) wenigstens eine Luft-Trocknungseinrichtung (7) zur Trocknung der durch das Druckluftsystem (3) strömenden Luft (19) angeordnet ist.

13. Druckluftsystem für ein Fahrzeug, mit wenigstens einem Druckluft-Kreis (11, 13, 15), insbesondere mit wenigstens einem Druckluft-Bremskreis zur Bremsung des Fahrzeugs,
wobei der Druckluft-Kreis (11, 13, 15) wenigstens eine Luft-Speichereinrichtung (20), insbesondere wenigstens einen Luft-Speicherbehälter, zur Zwischenspeicherung von Druckluft aufweist,
wobei eine Druck-Ermittlungseinrichtung (27), insbesondere ein Drucksensor, vorgesehen ist, mittels der der aktuelle Luftdruck in der Luft-Speichereinrichtung (20) ermittelbar ist,
wobei eine Steuereinrichtung (5, 9, 21) vorgesehen ist, mittels der der Luftdruck in der Luft-Speichereinrichtung (20) in Abhängigkeit von dem ermittelten Luftdruck steuerbar ist, wobei, sofern der ermittelte Luftdruck einen definierten Einschalt-Druckwert (p_{E1}, p_{E2}) unterschreitet, mittels der Steuereinrichtung (5, 9, 21) der Luftdruck in der Luft-Speichereinrichtung (20) bis zum Erreichen eines definierten, größer als der Einschalt-Druckwert (p_{E1}, p_{E2}) ausgebildeten Ausschalt-Druckwerts (p_{A1}, p_{A2}) selbsttätig erhöhbar ist, **dadurch gekennzeichnet,**
**dass** eine Beladungszustand-Ermittlungseinrichtung (23) vorgesehen ist, mittels der der aktuelle Beladungszustand des Fahrzeugs (1) ermittelbar ist, und
**dass**, insbesondere zur Verringerung des Energieverbrauchs des Druckluftsystems (3), mittels der Steuereinrichtung (5, 9, 21) der Einschalt-Druckwert (p_{E1}, p_{E2}) und/oder der Ausschalt-Druckwert (p_{A1}, p_{A2}) in Abhängigkeit von dem ermittelten Beladungszustand des Fahrzeugs (1) selbsttätig einstellbar und/oder verstellbar ist.

14. Fahrzeug mit einem Druckluftsystem nach Anspruch 13.

## Claims

1. Method for operating a compressed air system of a vehicle, in particular of a utility vehicle, the compressed air system (3) having at least one compressed air circuit (11, 13, 15, 17), in particular at least one compressed air brake circuit for braking the vehicle, the compressed air circuit (11, 13, 15) having at least one air accumulator device (20), in particular at least one air accumulator vessel, for buffer storage of compressed air, a pressure determining device (27), in particular a pressure sensor, being provided, by means of which the current air pressure in the air accumulator device (20) is determined, a control device (5, 9, 21) being provided, by means of which the air pressure in the air accumulator device (20) is controlled in a manner which is dependent on the determined air pressure, **characterized in that**, if the determined air pressure undershoots a defined switch-on pressure value (p_{E1}, p_{E2}), the air pressure in the air accumulator device (20) is increased automatically by means of the control device (5, 9, 21) until a defined switch-off pressure value (p_{A1}, p_{A2}) which is configured to be greater than the switch-on pressure value (p_{E1}, p_{E2}), is reached, a loading state determining device (23) being provided, by means of which the current loading state of the vehicle (1) is determined, and **in that**, in particular in order to decrease the energy consumption of the compressed air system (3), the switch-on pressure value (p_{E1}, p_{E2}) and/or the switch-off pressure value (p_{A1}, p_{A2}) are/is set and/or adjusted automatically by means of the control device (5, 9, 21) in a manner which is dependent on the determined loading state of the vehicle (1).

2. Method according to Claim 1, **characterized in that** the current loading state of the vehicle (1) is determined via the vehicle weight and/or via the axle loads which act on the wheel axles of the vehicle (1).

3. Method according to Claim 1 or 2, **characterized in that** the loading state determining device (20) has a wheel load determining device, by means of which the wheel loads which act on the vehicle wheels (10, 18) of the vehicle (1) are determined.

4. Method according to Claim 2 or 3, **characterized in that**, if the current vehicle weight (G₂) exceeds a defined vehicle weight value (G_{def.}), by means of the control device (5, 9, 21) a higher switch-on pressure value (p_{E2}) and/or a higher switch-off pressure value (p_{A2}) is set in the at least one compressed air circuit (11, 13, 17) by means of the control device (5, 9, 21) than for the case where the vehicle weight (G₁) undershoots the defined vehicle weight value (G_{def.}).

5. Method according to one of the preceding claims, **characterized in that** the at least one compressed air circuit is formed by way of a compressed air brake circuit for braking (11, 13) the vehicle, and/or **in that** the at least one compressed air circuit is formed by way of a chassis circuit (15), in particular by way of an air suspension circuit.

6. Method according to one of the preceding claims, **characterized in that** the vehicle has at least one front axle and at least one rear axle and a plurality of (in particular, two) compressed air circuits which are configured as compressed air brake circuits (11, 13), the front axle-side vehicle wheels (10) being braked by means of a first compressed air brake circuit (11), and the rear axle-side vehicle wheels (18) being braked by means of a second compressed air brake circuit (13), it preferably being provided that the switch-on pressure value and/or the switch-off pressure value (p_{A1}, p_{A2}) of the first and second compressed air brake circuit (11, 13) are/is set and/or adjusted by means of the control device (5, 9, 21) in a manner which is dependent on the determined loading state of the vehicle (1).

7. Method according to Claim 6, **characterized in that** the switch-on pressure value of the first compressed air brake circuit (11) and the switch-on pressure value of the second compressed air brake circuit (13) are always set with equal values by means of the control device (5, 9, 21), and/or the switch-off pressure value of the first compressed air brake circuit (11) and the switch-off pressure value of the second compressed air brake circuit (13) are always set with equal values by means of the control device (5, 9, 21).

8. Method according to one of the preceding claims, **characterized in that** the setting of the switch-on pressure value (p_{E1}, p_{E2}) and/or of the switch-off pressure value (p_{A1}, p_{A2}) of the at least one compressed air circuit (11, 13, 15) takes place by means of a characteristic diagram which is stored in the control device (5, 9, 21), in particular in a control unit of the control device, in which characteristic diagram the dependence of the switch-on pressure value (p_{E1}, p_{E2}) and/or of the switch-off pressure value (p_{A1}, p_{A2}) on the loading state of the vehicle (1) is plotted.

9. Method according to one of the preceding claims, **characterized in that** it can be determined by means of the control device (5, 9, 21) whether the vehicle (1) is in an overrun mode or not, the control device (5, 9, 21) switching automatically from a normal operating mode into an overrun operating mode if the vehicle (1) is in the overrun mode, in which overrun operating mode the air pressure in the at least one air accumulator device is increased by means of the control device (5, 9, 21) until a defined maximum pressure value (pₘₐₓ) of the air accumulator device (20) is reached, it preferably being provided that the maximum pressure value (pₘₐₓ) is configured to be greater than the switch-off pressure value (p_{A1}, p_{A2}) of the respective air accumulator device (20).

10. Method according to one of the preceding claims, **characterized in that** the determination of the current loading state of the vehicle (1) is repeated periodically, and/or **in that** the current loading state of the vehicle (1) is determined in real time.

11. Method according to one of the preceding claims, **characterized in that** the control device has a control unit (21) and/or at least one air compressor (5), in particular at least one compressor, it preferably being provided that the air compressor (5) is driven in a normal operating mode of the vehicle (1) by a vehicle-side drive device for driving the vehicle (1).

12. Method according to Claim 11, **characterized in that** the compressed air system (3) has a plurality of compressed air circuits (11, 13, 15, 17), the compressed air system (3) having, downstream (as viewed in the air flow direction) of the at least one air compressor (5), a multiple-circuit protective valve (9), by means of which the air supply to each compressed air circuit (11, 13, 15, 17) can be shut off and can be released, it preferably being provided that, as viewed in the air flow direction, at least one air drying device (7) for drying the air (19) which flows through the compressed air system (3) is arranged downstream of the at least one air compressor (5) and upstream of the multiple-circuit protective valve (9).

13. Compressed air system for a vehicle, with at least one compressed air circuit (11, 13, 15), in particular with at least one compressed air brake circuit for braking the vehicle, the compressed air circuit (11, 13, 15) having at least one air accumulator device (20), in particular at least one air accumulator vessel, for buffer storage of compressed air, a pressure determining device (27), in particular a pressure sensor, being provided, by means of which the current air pressure in the air accumulator device (20) can be determined, a control device (5, 9, 21) being provided, by means of which the air pressure in the air accumulator device (20) can be controlled in a manner which is dependent on the determined air pressure, it being possible for the air pressure in the air accumulator device (20) to be increased automatically by means of the control device (5, 9, 21), if the determined air pressure undershoots a defined switch-on pressure value (p_{E1}, p_{E2}), until a defined switch-off pressure value (p_{A1}, p_{A2}) which is configured to be greater than the switch-on pressure value (p_{E1}, p_{E2}) is reached, **characterized in that** a loading state determining device (23) is provided, by means of which the current loading state of the vehicle (1) can be determined, and **in that**, in particular in order to reduce the energy consumption of the compressed air system (3), the switch-on pressure value (p_{E1}, p_{E2}) and/or the switch-off pressure value (p_{A1}, p_{A2}) can be set and/or adjusted automatically by means of the control device (5, 9, 21) in a manner which is dependent on the determined loading state of the vehicle (1).

14. Vehicle with a compressed air system according to Claim 13.

## Revendications

1. Procédé de fonctionnement d'un système d'air comprimé d'un véhicule, en particulier d'un véhicule utilitaire, le système d'air comprimé (3) comportant au moins un circuit d'air comprimé (11, 13, 15, 17), en particulier au moins un circuit de freinage à air comprimé destiné à freiner le véhicule, le circuit d'air comprimé (11, 13, 15) comportant au moins un dispositif de stockage d'air (20), en particulier au moins un récipient de stockage d'air, destiné au stockage intermédiaire d'air comprimé, un dispositif de détermination de pression (27), en particulier un capteur de pression, étant prévu pour déterminer la pression d'air actuelle dans le dispositif de stockage d'air (20),
un dispositif de commande (5, 9, 21) étant prévu pour commander l'air comprimé dans le dispositif de stockage d'air (20) en fonction de l'air comprimé déterminé, **caractérisé en ce que**
si la pression d'air déterminée est inférieure à une valeur de pression d'activation (p_{E1}, p_{E2}), la pression d'air dans le dispositif de stockage d'air (20) est automatiquement augmentée au moyen du dispositif de commande (5, 9, 21) jusqu'à ce qu'elle atteigne une valeur de pression de désactivation définie (p_{A1}, p_{A2}) supérieure à la valeur de pression d'activation (p_{E1}, p_{E2}), un dispositif de détermination de l'état de charge (23) étant prévu pour déterminer l'état de charge actuel du véhicule (1), et **en ce que**
notamment pour réduire la consommation d'énergie du système d'air comprimé (3), la valeur de pression d'activation (p_{E1}, p_{E2}) et/ou la valeur de pression de désactivation (p_{A1}, p_{A2}) sont automatiquement réglées et/ou ajustées par le dispositif de commande (5, 9, 21) en fonction de l'état de charge déterminé du véhicule (1).

2. Procédé selon la revendication 1, **caractérisé en ce que** l'état de charge actuel du véhicule (1) est déterminé via le poids du véhicule et/ou via les charges par essieu agissant sur les essieux des roues du véhicule (1).

3. Procédé selon la revendication 1 ou 2, **caractérisé en ce que** le dispositif de détermination d'état de charge (23) comporte un dispositif de détermination de charge de roue qui détermine les charges de roue agissant sur les roues (10, 18) du véhicule (1).

4. Procédé selon la revendication 2 ou 3, **caractérisé en ce que**, si le poids actuel (G₂) du véhicule est supérieur à une valeur définie (G_{def}.) du poids du véhicule, une valeur de pression d'activation (p_{E2}) plus élevée et/ou une valeur de pression de désactivation (p_{A2}) plus élevée est réglée dans l'au moins un circuit d'air comprimé (11, 13, 17) au moyen du dispositif de commande (5, 9, 21) que dans le cas où le poids (G₁) du véhicule est inférieur à la valeur définie (G_{def}.) du poids du véhicule.

5. Procédé selon l'une quelconque des revendications précédentes, **caractérisé en ce que** l'au moins un circuit d'air comprimé est formé par un circuit de freinage à air comprimé pour le freinage (11, 13) du véhicule, et/ou que l'au moins un circuit d'air comprimé est formé par un cercle de châssis (15), en particulier par un cercle de suspension pneumatique.

6. Procédé selon l'une des revendications précédentes, **caractérisé en ce que** le véhicule comporte au moins un essieu avant et au moins un essieu arrière et plusieurs, notamment deux, circuits d'air comprimé conçus comme circuits de freinage à air comprimé (11, 13), les roues de véhicule côté essieu avant (10) étant freinées au moyen d'un premier circuit de freinage à air comprimé (11), et les roues de véhicule côté essieu arrière (18) étant freinées au moyen d'un deuxième circuit de freinage à air comprimé (13), le dispositif de commande (5, 9, 21) étant de préférence prévu pour régler et/ou ajuster automatiquement la valeur de pression d'activation et/ou la valeur de pression de désactivation (p_{A1}, p_{A2}) des premier et deuxième circuits de freinage à air comprimé (11, 13) en fonction de l'état de charge déterminé du véhicule (1).

7. Procédé selon la revendication 6, **caractérisé en ce que** la valeur de pression d'activation du premier circuit de freinage à air comprimé (11) et la valeur de pression d'activation du deuxième circuit de freinage à air comprimé (13) sont toujours réglées à la même valeur au moyen du dispositif de commande (5, 9, 21) et/ou la valeur de pression de désactivation du premier circuit de freinage à air comprimé (11) et la valeur de pression de désactivation du deuxième circuit de freinage à air comprimé (13) sont toujours réglées à la même valeur au moyen du dispositif de commande (5, 9, 21).

8. Procédé selon l'une des revendications précédentes, **caractérisé en ce que** le réglage de la valeur de pression d'activation (p_{E1}, p_{E2}) et/ou de la valeur de pression de désactivation (p_{A1}, p_{A2}) de l'au moins un circuit d'air comprimé (11, 13, 15) se fait au moyen d'un diagramme caractéristique qui est mémorisé dans le dispositif de commande (5, 9, 21), en particulier dans une unité de commande du dispositif de commande, et dans lequel est entrée la relation de dépendance entre la valeur de pression d'activation (p_{E1}, p_{E2}) et/ou la valeur de pression de désactivation (p_{A1}, p_{A2}) et l'état de charge du véhicule (1).

9. Procédé selon l'une des revendications précédentes, **caractérisé en ce que** le dispositif de commande (5, 9, 21) permet de déterminer si le véhicule (1) est en mode de poussée ou non, si le véhicule (1) est en mode de poussée, le dispositif de commande (5, 9, 21) commutant automatiquement d'un mode de fonctionnement normal à un mode de poussée dans lequel la pression d'air dans l'au moins un dispositif de stockage d'air est augmentée au moyen du dispositif de commande (5, 9, 21) jusqu'à ce qu'elle atteigne une valeur de pression maximale définie (pₘₐₓ) du dispositif de stockage d'air (20), la valeur de pression maximale (pₘₐₓ) étant de préférence prévue pour être supérieure à la valeur de pression de désactivation (p_{A1}, p_{A2}) du dispositif de stockage d'air respectif (20).

10. Procédé selon l'une des revendications précédentes, **caractérisé en ce que** la détermination de l'état de charge actuel du véhicule (1) est répétée périodiquement, et/ou **en ce que** l'état de charge actuel du véhicule (1) est déterminé en temps réel.

11. Procédé selon l'une des revendications précédentes, **caractérisé en ce que** le dispositif de commande comporte une unité de commande (21) et/ou au moins un moyen de compression d'air (5), notamment au moins un compresseur, le moyen de compression d'air (5) étant de préférence prévu pour être entraîné dans un mode de fonctionnement normal du véhicule (1) par un dispositif d'entraînement côté véhicule destiné à entraîner le véhicule (1).

12. Procédé selon la revendication 11, **caractérisé en ce que** le système d'air comprimé (3) comporte une pluralité de circuits d'air comprimé (11, 13, 15, 17), le système d'air comprimé (3), vu dans le sens d'écoulement d'air, comportant en aval de l'au moins un moyen de compression d'air (5) une vanne de protection à circuits multiples (9) permettant de bloquer et libérer l'alimentation en air de chaque circuit d'air comprimé (11, 13, 15, 17), au moins un dispositif de séchage d'air (7) destiné à sécher l'air (19) circulant à travers le système d'air comprimé (3) étant de préférence prévu pour être disposé, vu dans le sens d'écoulement d'air, en aval de l'au moins un moyen de compression d'air (5) et en amont de la vanne de protection à circuits multiples (9).

13. Système d'air comprimé destiné à un véhicule et comprenant au moins un circuit d'air comprimé (11, 13, 15), notamment au moins un circuit de freinage à air comprimé destiné à freiner le véhicule,
le circuit d'air comprimé (11, 13, 15) comportant au moins un dispositif de stockage d'air (20), en particulier au moins un récipient de stockage d'air, destiné au stockage intermédiaire d'air comprimé,
un dispositif de détermination de pression (27), en particulier un capteur de pression, étant prévu qui permet de déterminer la pression d'air actuelle dans le dispositif de stockage d'air (20),
un dispositif de commande (5, 9, 21) étant prévu qui permet de commander la pression d'air dans le dispositif de stockage d'air (20) en fonction de la pression d'air déterminée, si la pression d'air déterminée est inférieure à une valeur de pression d'activation définie (p_{E1}, p_{E2}), la pression d'air dans le dispositif de stockage d'air (20) pouvant être augmentée automatiquement au moyen du dispositif de commande (5, 9, 21) jusqu'à ce qu'elle atteigne une valeur de pression de désactivation définie (p_{A1}, p_{A2}) conçue pour être supérieure à la valeur de pression d'activation (p_{E1}, p_{E2}), **caractérisé en ce que**
un dispositif de détermination d'état de charge (23) est prévu qui permet de déterminer l'état de charge actuel du véhicule (1), et **en ce que**
la valeur de pression d'activation (p_{E1}, p_{E2}) et/ou la valeur de pression de désactivation (p_{A1}, p_{A2}) peuvent être automatiquement réglées et/ou ajustées au moyen du dispositif de commande (5, 9, 21) en fonction de l'état de charge déterminé du véhicule (1), notamment pour réduire la consommation d'énergie du système d'air comprimé (3).

14. Véhicule comprenant un système d'air comprimé selon la revendication 13.
